# EUROPÄISCHE PATENTSCHRIFT

(11) **EP 4 316 911 B1**
(45) Veröffentlichungstag und Bekanntmachung des Hinweises auf die Patenterteilung: **26.02.2025**
(21) Anmeldenummer: 22188112.1
(22) Anmeldetag: 01.08.2022
(51) Int. Cl.: B60Q 1/10, B60Q 1/24, B60Q 1/32, F21S 41/151, F21S 41/153, F21S 41/25, F21S 41/255, F21S 41/265, F21S 41/20, F21S 41/40, F21S 41/43, F21S 41/663

(54) **KRAFTFAHRZEUGLICHTSYSTEM ZUR ABSTRAHLUNG VON POSITIONSBEGRENZTEN BODENPROJEKTIONEN**
AUTOMOTIVE LIGHT SYSTEM FOR EMITTING LOCATION-LIMITED GROUND PROJECTIONS
SYSTÈME D'ÉCLAIRAGE DE VÉHICULE AUTOMOBILE DESTINÉ À L'ÉMISSION DES PROJECTIONS AU SOL À POSITION LIMITÉE

(43) Veröffentlichungstag der Anmeldung: 07.02.2024
(73) Patentinhaber: ZKW Group GmbH, 3250 Wieselburg (AT)
(72) Erfinder: Zeuner, Markus, 3240 Mank (AT); Urban, Christian, 3483 Feuersbrunn (AT)
(74) Vertreter: Patentanwaltskanzlei Matschnig & Forsthuber OG

(56) Entgegenhaltungen:
- EP-A1- 1 916 154
- EP-A1- 3 608 585
- EP-A2- 1 203 695
- WO-A1-2015/058227
- WO-A1-2019/110374
- WO-A2-2015/032795
- DE-A1- 102014 210 500
- DE-A1- 102018 203 875
- DE-U1- 202014 101 755
- US-A1- 2019 322 209

## Beschreibung

Die Erfindung betrifft ein Kraftfahrzeuglichtsystem zur Abstrahlung von positionsbegrenzten Bodenprojektionen für ein Kraftfahrzeug mit einem gestuft höhenverstellbaren Fahrwerk, wobei zumindest zwei vordefinierte Fahrwerk-Höhenstufen vorgesehen sind, nämlich eine Nullstufe und zumindest eine höher gelegene Betriebsstufe, wobei das Kraftfahrzeuglichtsystem Folgendes umfasst: Zumindest zwei Projektionsvorrichtungen, eine mit jeder Projektionsvorrichtungen verbundene Steuereinheit zur einzelnen Ansteuerung jeder Projektionsvorrichtung, wobei jede Projektionsvorrichtung zur Montage in oder an einem Kraftfahrzeug, insbesondere in oder an einem Türschweller des Kraftfahrzeugs, eingerichtet ist, wobei jede Projektionsvorrichtung weiters dazu eingerichtet ist, in einem an dem Kraftfahrzeug montierten und aktivierten Zustand genau eine Bodenprojektion ausgehend von einem unmittelbaren Nahbereich des Kraftfahrzeug auf einen seitlich umgebenden Boden bis hin zu einem maximalen flachen Grenzwinkel abzustrahlen, wobei sämtliche Projektionsvorrichtungen auf einem gemeinsam Träger befestigt und innerhalb einer gemeinsamen Ebene angeordnet sind und jeweils eine optische Achse aufweisen, wobei die optischen Achsen der Projektionsvorrichtungen zueinander parallel orientiert sind, wobei jede Projektionsvorrichtung ein Mikrolinsenprojektionsmodul ist, wobei jedes Mikrolinsenprojektionsmodul eine Lichtquelle, eine Eintrittsoptik, welche eine Gesamtanzahl von Mikro-Eintrittsoptiken aufweist, welche in einem Array angeordnet sind, wobei die Eintrittsoptik zum Empfang von der Lichtquelle abgestrahlten Licht eingerichtet ist, sowie eine Austrittsoptik, welche eine Gesamtanzahl von Mikro-Austrittsoptiken aufweist, welche in einem Array angeordnet sind, aufweist, wobei jeder Mikro-Eintrittsoptik genau eine Mikro-Austrittsoptik zugeordnet ist, wobei die Mikro-Eintrittsoptiken derart ausgebildet und/oder die Mikro-Eintrittsoptiken und die Mikro-Austrittsoptiken derart zueinander angeordnet sind, dass im Wesentlichen das gesamte aus einer Mikro-Eintrittsoptik austretende Licht nur in die zugeordnete Mikro-Austrittsoptik eintritt, und wobei das von den Mikro-Eintrittsoptiken vorgeformte Licht von den Mikro-Austrittsoptiken im montierten Zustand des Kraftfahrzeuglichtsystems in einen Bereich neben dem Kraftfahrzeug als besagte Bodenprojektion abbildbar ist, wobei zwischen der Mikro-Eintrittsoptik und der Mikro-Austrittsoptik zumindest eine Blendenvorrichtung angeordnet ist, wobei der Abstrahlwinkel jeder Projektionsvorrichtung im montierten Zustand hin zu einer horizontalen Ebene begrenzt ist, und zwar so, dass die Abstrahlung in Bezug auf die horizontale Ebene abwärts geneigt ist.

Systeme zur Abstrahlung von Bodenprojektionen sind aus dem Stand der Technik bekannt geworden. Ebenso ist der Einsatz von Mikroprojektionslinsenmodulen bekannt, beispielsweise aus der WO 2015/058227 A1 oder der WO 2019110374 A1, die jeweils den Aufbau von Mikroprojektionslinsenmodulen zeigen, der auch für den Einsatz bei der vorliegenden Erfindung grundsätzlich geeignet ist. Etwas anders als bei diesen Modulen, die z.B. eine Abblendlichtverteilung erzeugen, bei der die Blendenkante sehr stark ausgeleuchtet wird und deshalb die Mikroeintrittsoptik darauf fokussiert wird, ist es bei der vorliegenden Erfindung allerdings möglich, dass kein Fokus auf die Kanten der Blendenöffnung erfolgt, sondern eine gleichmäßige Ausleuchtung der Öffnung erzielt wird, um im Idealfall eine gleichmäßige Ausleuchtung zu erreichen. Es kann sich also um eine sogenannte Köhler'sche Beleuchtung handeln, wobei, wie gesagt, der Brennpunkt der Mikroeintrittsoptik nicht zwingend auf der Blendenebene liegt, sondern zu dieser (nach vorne oder hinten gesehen in Lichtabstrahlrichtung) versetzt ist, um eine homogene Ausleuchtung über den gesamten Bereich der Blendenöffnung zu erzielen. Dokument WO 2015/032795 A2 zeigt ein System zur Abstrahlung von geformtem Licht auf eine Oberfläche. Dokument EP 1916154 A1 zeigt ein Verfahren zur Informationsdarstellung. Dokument EP 1203695 A2 betrifft ein Verfahren sowie eine Vorrichtung zur Leuchtweitenregulierung eines Scheinwerfers.

Ein Problem von Bodenprojektionsmodulen gemäß dem Stand der Technik besteht darin, dass im Falle des Einsatzes in Verbindung mit Fahrzeugen, die ein höhenverstellbares Fahrwerk aufweisen, Verzerrungen der abgestrahlten Bodenprojektion in Abhängigkeit von der Einstellung der Fahrwerkshöhe auftreten können.

Eine Aufgabe der Erfindung besteht daher darin, diesen Nachteil des Standes der Technik zu beheben. Diese Aufgabe wird mit einem Kraftfahrzeuglichtsystem der eingangs genannten Art gelöst, bei welchem erfindungsgemäß die Steuereinheit eine Kommunikationsschnittstelle zum Empfang und zur Auswertung eines Fahrwerkssignals aufweist, wobei das Fahrwerkssignal Informationen zu dem Ist-Zustand der Fahrwerk-Höhenstufe enthält, wobei für jede Fahrwerk-Höhenstufe der Betrieb zumindest eine hierfür optimierten Projektionsvorrichtung vorgesehen ist, wobei sich für jede Projektionsvorrichtung, die für eine Fahrwerk-Höhenstufe optimiert ist, aufgrund der in der jeweiligen Fahrwerk-Höhenstufe vorliegenden Höhe sowie dem der jeweiligen Projektionsvorrichtung zugeordneten flachen Grenzwinkel eine Reichweitengrenze der Bodenprojektion ergibt, wobei die Optimierung der Projektionsvorrichtungen dergestalt implementiert ist, dass die für die jeweiligen Fahrwerk-Höhenstufen optimierten Projektionsvorrichtungen unterschiedliche flache Grenzwinkel aufweisen, und zwar so, dass die flachen Grenzwinkel der Projektionsvorrichtungen ausgehend von jener Projektionsvorrichtung, die für die Nullstufe optimiert ist, mit zunehmender Höhe der den Projektionsvorrichtungen zugeordneten Fahrwerk-Höhenstufen entsprechend der Höhendifferenz zur Nullstufe zunehmen, sodass für jede Fahrwerk-Höhenstufe zumindest eine Projektionsvorrichtung vorgesehen ist, deren Reichweitengrenze im Betrieb der Fahrwerk-Höhenstufe, für die die jeweilige Projektionsvorrichtung optimiert ist, mit der Reichweitengrenze der Projektionsvorrichtung für die Nullstufe übereinstimmt.

Insbesondere kann vorgesehen sein, dass die Ansteuerung der Projektionsvorrichtungen durch die Steuereinheit dergestalt ausgebildet ist, dass der Betrieb jener Projektionsvorrichtungen deaktiviert wird, die für eine niedrigere Fahrwerk-Höhenstufe als der anhand des Fahrwerkssignals festgestellten vorliegenden Fahrwerk-Höhenstufe optimiert sind.

Durch die Erfindung ist es möglich, dass die die Reichweitengrenze trotz Zunahme der relativen Höhe der Projektionsvorrichtungen nicht überschritten wird. Unter einer optischen Achse einer Projektionsvorrichtung wird jene Achse verstanden, entlang der die Abstrahlung von Eintrittsoptiken hin zu den Austrittsoptiken erfolgt. Die Abstrahlung selbst wird dann durch die Blenden beschnitten und dadurch in der räumlichen Ausrichtung beeinflusst.

Weiters kann vorgesehen sein, dass die Ansteuerung der Projektionsvorrichtungen durch die Steuereinheit dergestalt ausgebildet ist, dass jene Projektionsvorrichtungen, die für einen Betrieb mit einer höheren Fahrwerk-Höhenstufe als der festgestellten vorliegenden Fahrwerk-Höhenstufe optimiert sind, weiterhin aktivierbar sind. Dadurch sind Überlagerungen der Bodenprojektionen möglich, ohne dass dabei die Reichweitengrenze überschritten wird.

Insbesondere kann vorgesehen sein, dass die Ansteuerung der Projektionsvorrichtungen durch die Steuereinheit dergestalt ausgebildet ist, dass durch eine zeitliche Abfolge der Aktivierung von Projektionsvorrichtungen eine Animation projizierbar ist, wobei die zeitliche Abfolge der Aktivierung auch jene Projektionsvorrichtungen umfasst, die für einen Betrieb mit einer höheren Fahrwerk-Höhenstufe als der festgestellten vorliegenden Fahrwerk-Höhenstufe optimiert sind.

Weiters kann vorgesehen sein, dass die Ansteuerung der Projektionsvorrichtungen durch die Steuereinheit dergestalt erfolgt, dass der Betrieb sämtlicher Projektionsvorrichtungen deaktiviert wird, die nicht für die festgestellte vorliegenden Fahrwerk-Höhenstufe optimiert sind. Die technische Lösung zeichnet sich durch eine besonders hohe Robustheit aus. Insbesondere kann vorgesehen sein, dass sich die Projektionsvorrichtungen, die für unterschiedliche Fahrwerk-Höhenstufen optimiert sind, durch die vorgesehene räumliche Positionierung an dem Kraftfahrzeug unterscheiden, und zwar so, dass mit Optimierung für abnehmende Höhe der Fahrwerk-Höhenstufen die Höhe der Montageposition der jeweiligen Projektionsvorrichtung zunimmt. Insbesondre kann vorgesehen sein, dass die unterste Projektionsvorrichtung den steilsten Winkel αₘₐₓ aufweist, sodass bei zunehmender Höhenstufe die Projektionsvorrichtung von oben weg abgeschaltet werden, und damit immer ein maximal steiler Projektionswinkel garantiert ist, mit dem Verzerrungen minimiert werden können.

Erfindungsgemäß ist vorgesehen, dass die Eintrittsoptiken und die Austrittsoptiken sämtlicher Projektionsvorrichtungen gleichartig ausgebildet sind, wobei sich die für die jeweiligen Fahrwerk-Höhenstufen optimierten Projektionsvorrichtungen in der Ausgestaltung der Blendenvorrichtungen voneinander unterscheiden.

Zudem ist erfindungsgemäß vorgesehen, dass sich die Projektionsvorrichtungen, die für unterschiedliche Fahrwerk-Höhenstufen optimiert sind, durch die Ausgestaltung von Blendenöffnungen voneinander unterscheiden, und zwar so, dass mit Optimierung für zunehmende Höhe der Fahrwerk-Höhenstufen die Größe der jeweilige Blendenöffnung abnimmt. Die Blendenöffnung wird dabei vorzugsweise dergestalt verkleinert, dass der maximale Ausleuchtbereich nicht überschritten wird. Unter einer kleineren Größe wird verstanden, dass die Fläche der Blendenöffnung geringer ist.

Weiters kann vorgesehen sein, dass die Steuerungseinheit zur Regelung der Intensität der Abstrahlung zumindest jener Lichtquellen eingerichtet ist, die den Projektionsvorrichtungen ausgenommen der Projektionsvorrichtung der Nullstufe zugeordnet sind.

Insbesondere kann vorgesehen sein, dass mit abnehmender Größe der Blendenöffnung die Nennleistung der Lichtquellen der entsprechenden Projektionsvorrichtungen erhöht ist, sodass die Lichtintensität der Lichtverteilungen, die von unterschiedlichen Projektionsvorrichtungen abgestrahlt wird, gleich ist. Das bedeutet, dass die durch die geringere Blendenöffnung verursachte geringere Lichtdurchlässigkeit kompensiert werden kann, sodass mit unterschiedlichen optimierten Projektionsvorrichtungen in der jeweiligen Fahrwerk-Höhenstufe auf der Projektionsfläche ein gleich heller Leuchteindruck entsteht.

Weiters kann vorgesehen sein, dass drei oder mehr Fahrwerk-Höhenstufen vorgesehen sind.

Insbesondere kann vorgesehen sein, dass die Differenz der Höhe der Nullstufe und der Höhe der höchsten Fahrwerk-Höhenstufe zwischen 1cm und 20cm beträgt und die Fahrwerk-Höhenstufen vorzugsweise gleichmäßig voneinander beabstandet sind. Beispielsweise kann die Spanne 13cm betragen, und sich über 3 Stufen erstrecken, wobei ausgehend von einer mittleren Stufe ein Hub von 55mm nach unten und 75mm nach oben möglich sein kann.

Weiters kann vorgesehen sein, dass die Reichweitengrenze der Bodenprojektion im montierten Zustand des Kraftfahrzeuglichtsystem zwischen 0,5m und 3m, insbesondere zwischen 1m und 2m beträgt, wobei die Reichweitengrenze entlang eines ebenen Bodens in Normalabstand zur Längsachse des Fahrzeugs ausgehend von einer Normalprojektion des Schwellers des Kraftfahrzeugs bis zum Ende der Bodenprojektion gemessen wird.

Insbesondere kann vorgesehen sein, dass die Projektionsvorrichtungen matrixartig auf dem gemeinsamen Träger angeordnet sind und zwischen benachbarten Projektionsvorrichtungen eine lichtundurchlässige Isolierung angeordnet ist.

Weiters kann vorgesehen sein, dass Kraftfahrzeug, umfassend zumindest zwei Kraftfahrzeuglichtsysteme nach einem der vorhergehenden Ansprüche, wobei das Kraftfahrzeug eine linke und eine rechte Fahrzeugseite aufweist, und jede Fahrzeugseite zumindest eine Tür mit einer der Tür zugeordneten Schwelle aufweist, wobei in den Schwellen jeweils die Projektionsvorrichtungen angeordnet sind.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung eines Fahrzeugs umfassend zwei erfindungsgemäße Kraftfahrzeuglichtsysteme,
Figur 2 eine schematische Darstellung von Komponenten eines Kraftfahrzeuglichtsystems,
Figur 3 eine beispielhafte Darstellung eines Mikrolinsenprojektionsmoduls,
Figur 4 eine beispielhafte Anordnung einer Mikro-Eintrittsoptik, einer Mikro-Blende sowie einer Mikro-Austrittsoptik,

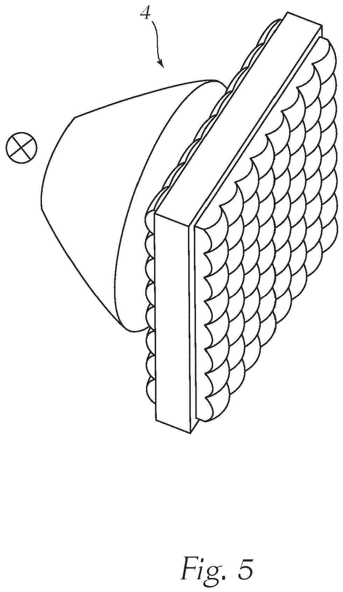

Figur 5 eine schematische Darstellung eines Mikrolinsenprojektionsmoduls im zusammengebauten Zustand,
Figur 6a eine Darstellung der Abstrahlung von Bodenprojektionen im einer unteren Fahrwerks-Höhenstufe, und
Figur 6b eine Darstellung der Abstrahlung von Bodenprojektionen im einer oberen Fahrwerks-Höhenstufe.

In den folgenden Figuren bezeichnen - sofern nicht anders angegeben - gleiche Bezugszeichen gleiche Merkmale.

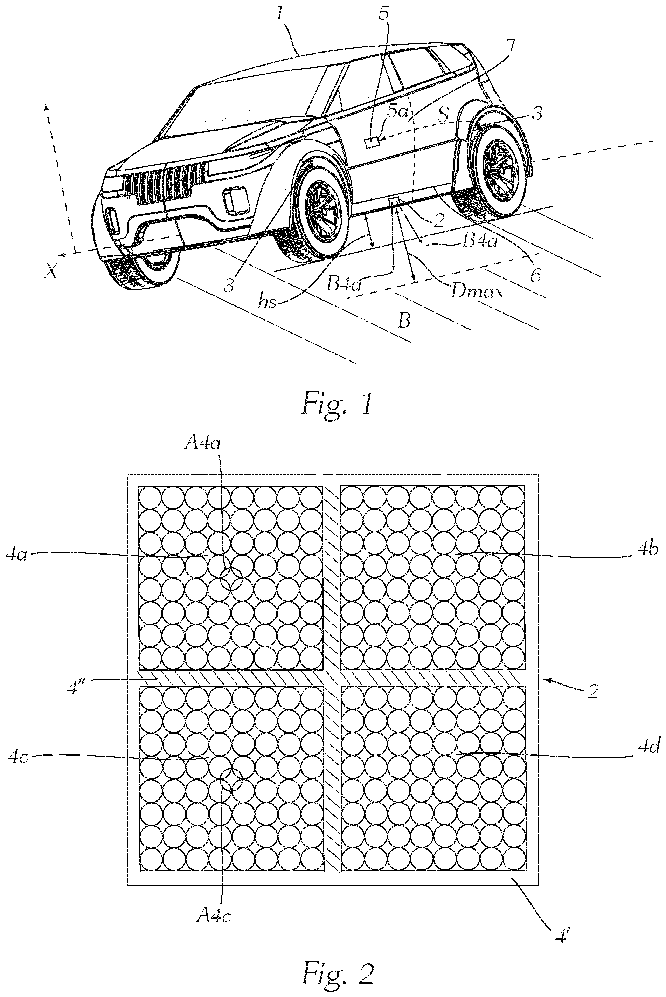

Figur 1 zeigt eine schematische Darstellung eines Fahrzeugs 1 umfassend zwei erfindungsgemäße Kraftfahrzeuglichtsysteme 2. Das Kraftfahrzeug 1 umfasst zumindest zwei Kraftfahrzeuglichtsysteme 2, wobei das Kraftfahrzeug 1 eine linke und eine rechte Fahrzeugseite aufweist, und jede Fahrzeugseite zumindest eine Tür 7 mit einer der Tür 7 zugeordneten Schwelle 6 aufweist, wobei in den Schwellen jeweils die Projektionsvorrichtungen 4a, 4b, 4c, 4d angeordnet sind.

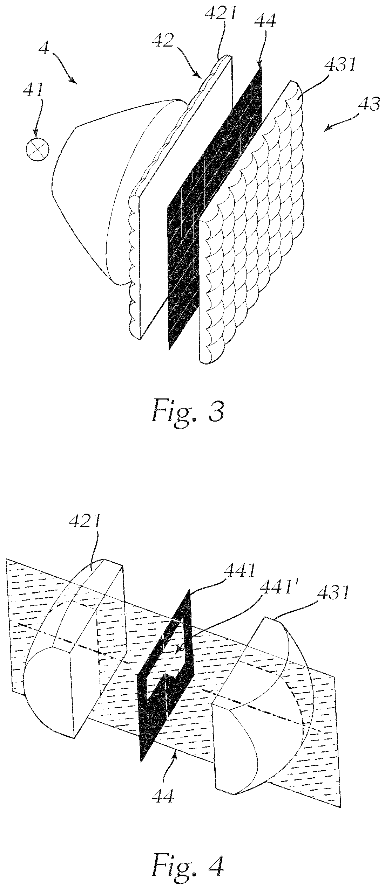

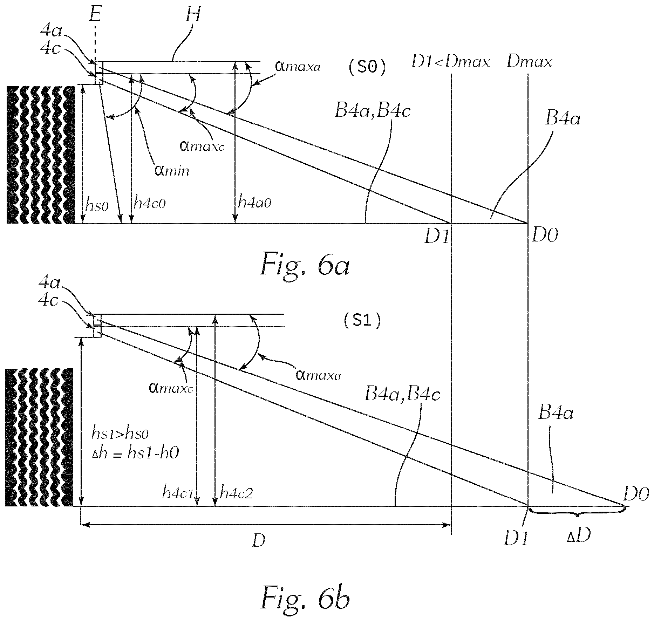

In Figur 6a und 6b ist erkennbar, dass das Kraftfahrzeuglichtsystem 2 zur Abstrahlung von positionsbegrenzten Bodenprojektionen B4a, B4c eingerichtet ist. Das Kraftfahrzeug 1 weist dabei ein gestuft höhenverstellbares Fahrwerk 3 auf (siehe Fig. 1), wobei zumindest zwei vordefinierte Fahrwerk-Höhenstufen S0, S1 (siehe Fig. 6a und 6b) vorgesehen sind, nämlich eine Nullstufe S0 und zumindest eine höher gelegene Betriebsstufe S1. Das Kraftfahrzeuglichtsystem 2 umfasst Folgendes: Zumindest zwei Projektionsvorrichtungen 4a, 4b, 4c, 4d (siehe Fig. 2), eine mit jeder Projektionsvorrichtungen 4a, 4b, 4c, 4d verbundene Steuereinheit 5 zur einzelnen Ansteuerung jeder Projektionsvorrichtung 4a, 4b, 4c, 4d, wobei jede Projektionsvorrichtung 4a, 4b, 4c, 4d zur Montage in oder an einem Kraftfahrzeug 1, insbesondere in oder an einem Türschweller 6 des Kraftfahrzeugs 1, eingerichtet ist, wobei jede Projektionsvorrichtung 4a, 4b, 4c, 4d weiters dazu eingerichtet ist, in einem an dem Kraftfahrzeug 1 montierten und aktivierten Zustand genau eine Bodenprojektion B4a, B4c ausgehend von einem unmittelbaren Nahbereich αₘᵢₙ des Kraftfahrzeug 1 auf einen seitlich umgebenden Boden B bis hin zu einem maximalen flachen Grenzwinkel αₘₐₓₐ, α_{maxc} abzustrahlen, wobei sämtliche Projektionsvorrichtungen 4a, 4b, 4c, 4d auf einem gemeinsam Träger 4' befestigt und innerhalb einer gemeinsamen Ebene E (siehe Fig. 6a) angeordnet sind und jeweils eine optische Achse A4a, A4c (siehe Fig. 2) aufweisen, wobei die optischen Achsen A4a, A4c der Projektionsvorrichtungen zueinander parallel orientiert sind. Jede Projektionsvorrichtung 4a, 4b, 4c, 4d ist als ein Mikrolinsenprojektionsmodul 4 (siehe Fig. 3) ausgebildet, wobei jedes Mikrolinsenprojektionsmodul 4 eine Lichtquelle 41, eine Eintrittsoptik 42, welche eine Gesamtanzahl von Mikro-Eintrittsoptiken 421 aufweist, welche in einem Array angeordnet sind, wobei die Eintrittsoptik 42 zum Empfang von der Lichtquelle 41 abgestrahlten Licht eingerichtet ist, sowie eine Austrittsoptik 43, welche eine Gesamtanzahl von Mikro-Austrittsoptiken 431 aufweist, welche in einem Array angeordnet sind, aufweist, wobei jeder Mikro-Eintrittsoptik 421 genau eine Mikro-Austrittsoptik 431 zugeordnet ist, wobei die Mikro-Eintrittsoptiken 421 derart ausgebildet und/oder die Mikro-Eintrittsoptiken 421 und die Mikro-Austrittsoptiken 431 derart zueinander angeordnet sind, dass im Wesentlichen das gesamte aus einer Mikro-Eintrittsoptik 421 austretende Licht nur in die zugeordnete Mikro-Austrittsoptik 431 eintritt, und wobei das von den Mikro-Eintrittsoptiken 421 vorgeformte Licht von den Mikro-Austrittsoptiken 431 im montierten Zustand des Kraftfahrzeuglichtsystems 2 in einen Bereich neben dem Kraftfahrzeug 1 als besagte Bodenprojektion B4a, B4c abbildbar ist, wobei zwischen der Mikro-Eintrittsoptik 421 und der Mikro-Austrittsoptik 431 zumindest eine Blendenvorrichtung 44 angeordnet ist, wobei der Abstrahlwinkel jeder Projektionsvorrichtung 4a, 4b, 4c, 4d im montierten Zustand hin zu einer horizontalen Ebene H (siehe Fig. 6a) begrenzt ist, und zwar so, dass die Abstrahlung in Bezug auf die horizontale Ebene H abwärts geneigt ist.

Die Steuereinheit 5 weist eine Kommunikationsschnittstelle 5a zum Empfang und zur Auswertung eines Fahrwerkssignals S auf, wobei das Fahrwerkssignal S Informationen zu dem Ist-Zustand der Fahrwerk-Höhenstufe S0, S1 enthält. Für jede Fahrwerk-Höhenstufe S0, S1 ist der Betrieb zumindest eine hierfür optimierten Projektionsvorrichtung 4a, 4b, 4c, 4d vorgesehen, wobei sich für jede Projektionsvorrichtung 4a, 4b, 4c, 4d, die für eine Fahrwerk-Höhenstufe S0, S1 optimiert ist, aufgrund der in der jeweiligen Fahrwerk-Höhenstufe S0, S1 vorliegenden Höhe h4c0, h4a0, h4c1, h4a1 sowie dem der jeweiligen Projektionsvorrichtung 4a, 4b, 4c, 4d zugeordneten flachen Grenzwinkel α_{max_a}, α_{maxc} eine Reichweitengrenze Dₘₐₓ (siehe Fig. 6a, 6b) der Bodenprojektion B4a, B4c ergibt.

Die Optimierung der Projektionsvorrichtungen 4a, 4b, 4c, 4d ist dergestalt implementiert, dass die für die jeweiligen Fahrwerk-Höhenstufen S0, S1 optimierten Projektionsvorrichtungen 4a, 4b, 4c, 4d unterschiedliche flache Grenzwinkel αₘₐₓₐ, α_{maxc} aufweisen, und zwar so, dass die flachen Grenzwinkel αₘₐₓₐ, α_{maxc} der Projektionsvorrichtungen 4a, 4b, 4c, 4d ausgehend von jener Projektionsvorrichtung 4a, die für die Nullstufe S0 optimiert ist, mit zunehmender Höhe der den Projektionsvorrichtungen 4a, 4b, 4c, 4d zugeordneten Fahrwerk-Höhenstufen S0, S1 entsprechend der Höhendifferenz Δh (siehe Fig. 6b) zur Nullstufe S0 zunehmen, sodass für jede Fahrwerk-Höhenstufe S0, S1 zumindest eine Projektionsvorrichtung 4a, 4b, 4c, 4d vorgesehen ist, deren Reichweitengrenze D0, D1 im Betrieb der Fahrwerk-Höhenstufe S0, S1, für die die jeweilige Projektionsvorrichtung 4a, 4b, 4c, 4d optimiert ist, mit der Reichweitengrenze Dₘₐₓ der Projektionsvorrichtung 4a, 4b, 4c, 4d für die Nullstufe S0 übereinstimmt. In dem vorliegend gezeigtem Ausführungsbeispiel sind nur zwei Höhenstufen S0 und S1 und nur zwei Abstrahlwinkel der Projektionsvorrichtungen gezeigt. Natürlich können auch mehrere Höhenstufen und Abstrahlwinkel bzw. Projektionsvorrichtungen vorgesehen sein, wobei jede Projektionsvorrichtung für eine Höhenstufe optimiert ist und jeder Höhenstufe zumindest eine hierfür optimierte Projektionsvorrichtung zugeordnet ist.

Es kann vorgesehen sein, dass die Ansteuerung der Projektionsvorrichtungen 4a, 4b, 4c, 4d durch die Steuereinheit 5 dergestalt ausgebildet ist, dass der Betrieb jener Projektionsvorrichtungen 4a, 4b, 4c, 4d deaktiviert wird, die für eine niedrigere Fahrwerk-Höhenstufe S0, S1 als der anhand des Fahrwerkssignals S festgestellten vorliegenden Fahrwerk-Höhenstufe S0, S1 optimiert sind. Dabei kann die Ansteuerung der Projektionsvorrichtungen 4a, 4b, 4c, 4d durch die Steuereinheit 5 dergestalt ausgebildet sein, dass jene Projektionsvorrichtungen 4a, 4b, 4c, 4d, die für einen Betrieb mit einer höheren Fahrwerk-Höhenstufe S1 als der festgestellten vorliegenden Fahrwerk-Höhenstufe S0 optimiert sind, weiterhin aktivierbar sind.

Insbesondere kann vorgesehen sein, dass die Ansteuerung der Projektionsvorrichtungen 4a, 4b, 4c, 4d durch die Steuereinheit 5 dergestalt ausgebildet ist, dass durch eine zeitliche Abfolge der Aktivierung von Projektionsvorrichtungen 4a, 4b, 4c, 4d eine Animation projizierbar ist, wobei die zeitliche Abfolge der Aktivierung auch jene Projektionsvorrichtungen 4a, 4b, 4c, 4d umfasst, die für einen Betrieb mit einer höheren Fahrwerk-Höhenstufe S1 als der festgestellten vorliegenden Fahrwerk-Höhenstufe S0 optimiert sind.

Alternativ dazu kann vorgesehen sein, dass die Ansteuerung der Projektionsvorrichtungen 4a, 4b, 4c, 4d durch die Steuereinheit 5 dergestalt erfolgt, dass der Betrieb sämtlicher Projektionsvorrichtungen 4a, 4b, 4c, 4d deaktiviert wird, die nicht für die festgestellte vorliegenden Fahrwerk-Höhenstufe S0, S1 optimiert sind.

Weiters kann vorgesehen sein, dass sich die Projektionsvorrichtungen 4a, 4b, 4c, 4d, die für unterschiedliche Fahrwerk-Höhenstufen S0, S1 optimiert sind, durch die vorgesehene räumliche Positionierung an dem Kraftfahrzeug 1 unterscheiden, und zwar so, dass mit Optimierung für abnehmende Höhe der Fahrwerk-Höhenstufen S0, S1 die Höhe der Montageposition der jeweiligen Projektionsvorrichtung 4a, 4b, 4c, 4d zunimmt.

In Fig. 4 ist schematisch erkennbar, dass die Eintrittsoptiken 42 und die Austrittsoptiken 43 sämtlicher Projektionsvorrichtungen 4a, 4b, 4c, 4d gleichartig ausgebildet sind, wobei sich die für die jeweiligen Fahrwerk-Höhenstufen S0, S1 optimierten Projektionsvorrichtungen 4a, 4b, 4c, 4d in der Ausgestaltung der Blendenvorrichtungen 8a', 8a", 8a'" voneinander unterscheiden können um die unterschiedlichen Grenzwinkel zu realisieren. Es ist vorgesehen, dass sich die Projektionsvorrichtungen 4a, 4b, 4c, 4d, die für unterschiedliche Fahrwerk-Höhenstufen S0, S1 optimiert sind, durch die Ausgestaltung von Blendenöffnungen 441' (siehe Fig. 4) der Mikroblenden 441 voneinander unterscheiden, und zwar so, dass mit Optimierung für zunehmende Höhe der Fahrwerk-Höhenstufen S0, S1 die Größe der jeweilige Blendenöffnung 441' abnimmt.

Es kann vorgesehen sein, dass die Steuerungseinheit 5 zur Regelung der Intensität der Abstrahlung zumindest jener Lichtquellen 41 eingerichtet ist, die den Projektionsvorrichtungen 4c, 4d ausgenommen der Projektionsvorrichtung 4a, 4b der Nullstufe S0 zugeordnet sind. Vorteilhaft kann vorgesehen sein, dass mit abnehmender Größe der Blendenöffnung 441' die Nennleistung der Lichtquellen 41 der entsprechenden Projektionsvorrichtungen 4a, 4b, 4c, 4d erhöht ist, sodass die Lichtintensität der Lichtverteilungen, die von unterschiedlichen Projektionsvorrichtungen 4a, 4b, 4c, 4d abgestrahlt wird, gleich ist. Das bedeutet, dass die durch die geringere Blendenöffnung verursachte geringere Lichtdurchlässigkeit kompensiert wird, sodass mit unterschiedlichen optimierten Projektionsvorrichtungen in der jeweiligen Fahrwerk-Höhenstufe auf der Projektionsfläche ein gleich heller Leuchteindruck entsteht.

Weiters kann vorgesehen sein, dass die Differenz der Höhe der Nullstufe S0 und der Höhe der höchsten Fahrwerk-Höhenstufe S1 zwischen 1cm und 20cm beträgt und die Fahrwerk-Höhenstufen S0, S1 vorzugsweise gleichmäßig voneinander beabstandet sind.

Insbesondere kann vorgesehen sein, dass die Reichweitengrenze Dₘₐₓ der Bodenprojektion im montierten Zustand des Kraftfahrzeuglichtsystem 2 zwischen 0,5m und 3m, insbesondere zwischen 1m und 2m beträgt, wobei die Reichweitengrenze Dₘₐₓ entlang eines ebenen Bodens B in Normalabstand zur Längsachse x des Fahrzeugs 1 ausgehend von einer Normalprojektion des Schwellers 6 des Kraftfahrzeugs bis zum Ende der Bodenprojektion B4a, B4c gemessen wird.

Zudem kann vorgesehen sein, dass die Projektionsvorrichtungen 4a, 4b, 4c, 4d matrixartig auf dem gemeinsamen Träger 4' (siehe Fig. 2) angeordnet sind und zwischen benachbarten Projektionsvorrichtungen 4a, 4b, 4c, 4d eine lichtundurchlässige Isolierung 4" angeordnet ist.

Mit Blick auf Fig. 6a und Fig. 6b sei erwähnt, dass darin die Reichweiten der Vorrichtungen 4a und 4c beispielhaft gezeigt sind, die sich in Abhängigkeit von der Fahrwerk-Höhenstufe bestimmt. Fig. 6a zeigt die Reichweiten in der Höhenstufe S0, Fig. 6b jene in der Höhenstufe S1, die gegenüber der Stufe S0 erhöht ist. Die Reichweite D0 und D1 sind in der Nullstufe S0 niedriger als in der Höhenstufe S1, und zwar um die Differenz ΔD. Um eine maximale Reichweitengrenze Dₘₐₓ nicht zu überschreiten, kann daher die obere Projektionsvorrichtung 4a in der Höhe S1 abgeschaltet werden. Die Reichweite D1 bzw. der dazu korrespondierende Abstrahlwinkel α_{maxc} der darunter liegenden Projektionsvorrichtung 4c ist dabei so gewählt, dass die Reichweite D1 in der Höhe S1 genau mit der Reichweite Dₘₐₓ übereinstimmt. Durch gezieltes Zu- und Wegschalten einzelner Projektionsvorrichtungen in Abhängigkeit von der Fahrwerks-Höhenstufe kann daher die Bodenprojektion weitgehend konstant gehalten werden und sichergestellt werden, dass die Grenzen, insbesondere die maximale Reichweite der Bodenprojektion Dₘₐₓ nicht überschritten werden.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Kraftfahrzeuglichtsystem (2) zur Abstrahlung von positionsbegrenzten Bodenprojektionen (B4a, B4c) für ein Kraftfahrzeug (1) mit einem gestuft höhenverstellbaren Fahrwerk (3), wobei zumindest zwei vordefinierte Fahrwerk-Höhenstufen (S0, S1) vorgesehen sind, nämlich eine Nullstufe (S0) und zumindest eine höher gelegene Betriebsstufe (S1), wobei das Kraftfahrzeuglichtsystem (2) Folgendes umfasst:
- zumindest zwei Projektionsvorrichtungen (4a, 4b, 4c, 4d),
- eine mit jeder Projektionsvorrichtungen (4a, 4b, 4c, 4d) verbundene Steuereinheit (5) zur einzelnen Ansteuerung jeder Projektionsvorrichtung (4a, 4b, 4c, 4d),
wobei jede Projektionsvorrichtung (4a, 4b, 4c, 4d) zur Montage in oder an einem Kraftfahrzeug, insbesondere in oder an einem Türschweller (6) des Kraftfahrzeugs (1), eingerichtet ist, wobei jede Projektionsvorrichtung (4a, 4b, 4c, 4d) weiters dazu eingerichtet ist, in einem an dem Kraftfahrzeug (1) montierten und aktivierten Zustand genau eine Bodenprojektion (B4a, B4c) ausgehend von einem unmittelbaren Nahbereich (αₘᵢₙ) des Kraftfahrzeug (1) auf einen seitlich umgebenden Boden (B) bis hin zu einem maximalen flachen Grenzwinkel (α_{max_a}, α_{maxc}) abzustrahlen, wobei sämtliche Projektionsvorrichtungen (4a, 4b, 4c, 4d) auf einem gemeinsam Träger (4') befestigt und innerhalb einer gemeinsamen Ebene (E) angeordnet sind und jeweils eine optische Achse aufweisen, wobei die optischen Achsen der Projektionsvorrichtungen zueinander parallel orientiert sind, wobei der Abstrahlwinkel jeder Projektionsvorrichtung (4a, 4b, 4c, 4d) im montierten Zustand hin zu einer horizontalen Ebene (H) begrenzt ist, und zwar so, dass die Abstrahlung in Bezug auf die horizontale Ebene (H) abwärts geneigt ist,
**dadurch gekennzeichnet, dass**
wobei jede Projektionsvorrichtung (4a, 4b, 4c, 4d) ein Mikrolinsenprojektionsmodul (4) ist, wobei jedes Mikrolinsenprojektionsmodul (4)
*eine Lichtquelle (41),
*eine Eintrittsoptik (42), welche eine Gesamtanzahl von Mikro-Eintrittsoptiken (421) aufweist, welche in einem Array angeordnet sind, wobei die Eintrittsoptik (42) zum Empfang von der Lichtquelle (41) abgestrahlten Licht eingerichtet ist,
*sowie eine Austrittsoptik (43), welche eine Gesamtanzahl von Mikro-Austrittsoptiken (431) aufweist, welche in einem Array angeordnet sind, aufweist,
wobei jeder Mikro-Eintrittsoptik (421) genau eine Mikro-Austrittsoptik (431) zugeordnet ist, wobei die Mikro-Eintrittsoptiken (421) derart ausgebildet und/oder die Mikro-Eintrittsoptiken (421) und die Mikro-Austrittsoptiken (431) derart zueinander angeordnet sind, dass im Wesentlichen das gesamte aus einer Mikro-Eintrittsoptik (421) austretende Licht nur in die zugeordnete Mikro-Austrittsoptik (431) eintritt, und wobei das von den Mikro-Eintrittsoptiken (421) vorgeformte Licht von den Mikro-Austrittsoptiken (431) im montierten Zustand des Kraftfahrzeuglichtsystems (2) in einen Bereich neben dem Kraftfahrzeug (1) als besagte Bodenprojektion (B4a, B4c) abbildbar ist, wobei zwischen der Mikro-Eintrittsoptik (421) und der Mikro-Austrittsoptik (431) zumindest eine Blendenvorrichtung (44) angeordnet ist, wobei die Steuereinheit (5) eine Kommunikationsschnittstelle (5a) zum Empfang und zur Auswertung eines Fahrwerkssignals (S) aufweist, wobei das Fahrwerkssignal (S) Informationen zu dem Ist-Zustand der Fahrwerk-Höhenstufe (S0, S1) enthält,
wobei für jede Fahrwerk-Höhenstufe (S0, S1) der Betrieb zumindest eine hierfür optimierten Projektionsvorrichtung (4a, 4b, 4c, 4d) vorgesehen ist, wobei sich für jede Projektionsvorrichtung (4a, 4b, 4c, 4d), die für eine Fahrwerk-Höhenstufe (S0, S1) optimiert ist, aufgrund der in der jeweiligen Fahrwerk-Höhenstufe (S0, S1) vorliegenden Höhe (h4c0, h4a0, h4c1, h4a1) sowie dem der jeweiligen Projektionsvorrichtung (4a, 4b, 4c, 4d) zugeordneten flachen Grenzwinkel (α_{max_a}, α_{maxc}) eine Reichweitengrenze (D_max) der Bodenprojektion (B4a, B4c) ergibt,
wobei die Optimierung der Projektionsvorrichtungen (4a, 4b, 4c, 4d) dergestalt implementiert ist, dass die für die jeweiligen Fahrwerk-Höhenstufen (S0, S1) optimierten Projektionsvorrichtungen (4a, 4b, 4c, 4d) unterschiedliche flache Grenzwinkel (α_{max_a}, α_{maxc}) aufweisen, und zwar so, dass die flachen Grenzwinkel (α_{max_a}, α_{maxc}) der Projektionsvorrichtungen (4a, 4b, 4c, 4d) ausgehend von jener Projektionsvorrichtung (4a), die für die Nullstufe (S0) optimiert ist, mit zunehmender Höhe der den Projektionsvorrichtungen (4a, 4b, 4c, 4d) zugeordneten Fahrwerk-Höhenstufen (S0, S1) entsprechend der Höhendifferenz (Δh) zur Nullstufe (S0) zunehmen, sodass für jede Fahrwerk-Höhenstufe (S0, S1) zumindest eine Projektionsvorrichtung (4a, 4b, 4c, 4d) vorgesehen ist, deren Reichweitengrenze (D0, D1) im Betrieb der Fahrwerk-Höhenstufe (S0, S1), für die die jeweilige Projektionsvorrichtung (4a, 4b, 4c, 4d) optimiert ist, mit der Reichweitengrenze (D_max) der Projektionsvorrichtung (4a, 4b, 4c, 4d) für die Nullstufe (S0) übereinstimmt, wobei die Eintrittsoptiken (42) und die Austrittsoptiken (43) sämtlicher Projektionsvorrichtungen (4a, 4b, 4c, 4d) gleichartig ausgebildet sind, wobei sich die für die jeweiligen Fahrwerk-Höhenstufen (S0, S1) optimierten Projektionsvorrichtungen (4a, 4b, 4c, 4d) in der Ausgestaltung der Blendenvorrichtungen (44) voneinander unterscheiden, wobei sich die Projektionsvorrichtungen (4a, 4b, 4c, 4d), die für unterschiedliche Fahrwerk-Höhenstufen (S0, S1) optimiert sind, durch die Ausgestaltung von Blendenöffnungen (441') voneinander unterscheiden, und zwar so, dass mit Optimierung für zunehmende Höhe der Fahrwerk-Höhenstufen (S0, S1) die Größe der jeweilige Blendenöffnung (441') abnimmt.

2. Kraftfahrzeuglichtsystem (2) nach Anspruch 1, wobei die Ansteuerung der Projektionsvorrichtungen (4a, 4b, 4c, 4d) durch die Steuereinheit (5) dergestalt ausgebildet ist, dass der Betrieb jener Projektionsvorrichtungen (4a, 4b, 4c, 4d) deaktiviert wird, die für eine niedrigere Fahrwerk-Höhenstufe (S0, S1) als der anhand des Fahrwerkssignals (S) festgestellten vorliegenden Fahrwerk-Höhenstufe (S0, S1) optimiert sind.

3. Kraftfahrzeuglichtsystem (2) nach Anspruch 2, wobei die Ansteuerung der Projektionsvorrichtungen (4a, 4b, 4c, 4d) durch die Steuereinheit (5) dergestalt ausgebildet ist, dass jene Projektionsvorrichtungen (4a, 4b, 4c, 4d), die für einen Betrieb mit einer höheren Fahrwerk-Höhenstufe (S1) als der festgestellten vorliegenden Fahrwerk-Höhenstufe (S0) optimiert sind, weiterhin aktivierbar sind.

4. Kraftfahrzeuglichtsystem (2) nach Anspruch 3, wobei die Ansteuerung der Projektionsvorrichtungen (4a, 4b, 4c, 4d) durch die Steuereinheit (5) dergestalt ausgebildet ist, dass durch eine zeitliche Abfolge der Aktivierung von Projektionsvorrichtungen (4a, 4b, 4c, 4d) eine Animation projizierbar ist, wobei die zeitliche Abfolge der Aktivierung auch jene Projektionsvorrichtungen (4a, 4b, 4c, 4d) umfasst, die für einen Betrieb mit einer höheren Fahrwerk-Höhenstufe (S1) als der festgestellten vorliegenden Fahrwerk-Höhenstufe (S0) optimiert sind.

5. Kraftfahrzeuglichtsystem (2) nach Anspruch 2, wobei die Ansteuerung der Projektionsvorrichtungen (4a, 4b, 4c, 4d) durch die Steuereinheit (5) dergestalt erfolgt, dass der Betrieb sämtlicher Projektionsvorrichtungen (4a, 4b, 4c, 4d) deaktiviert wird, die nicht für die festgestellte vorliegenden Fahrwerk-Höhenstufe (S0, S1) optimiert sind.

6. Kraftfahrzeuglichtsystem (2) nach einem der vorhergehenden Ansprüche, wobei sich die Projektionsvorrichtungen (4a, 4b, 4c, 4d), die für unterschiedliche Fahrwerk-Höhenstufen (S0, S1) optimiert sind, durch die vorgesehene räumliche Positionierung an dem Kraftfahrzeug (1) unterscheiden, und zwar so, dass mit Optimierung für abnehmende Höhe der Fahrwerk-Höhenstufen (S0, S1) die Höhe der Montageposition der jeweiligen Projektionsvorrichtung (4a, 4b, 4c, 4d) zunimmt.

7. Kraftfahrzeuglichtsystem (2) nach einem der vorhergehenden Ansprüche, wobei die Steuerungseinheit (5) zur Regelung der Intensität der Abstrahlung zumindest jener Lichtquellen (41) eingerichtet ist, die den Projektionsvorrichtungen (4c, 4d) ausgenommen der Projektionsvorrichtung (4a, 4b) der Nullstufe (S0) zugeordnet sind.

8. Kraftfahrzeuglichtsystem (2) nach Anspruch 7, wobei mit abnehmender Größe der Blendenöffnung (441') die Nennleistung der Lichtquellen (41) der entsprechenden Projektionsvorrichtungen (4a, 4b, 4c, 4d) erhöht ist, sodass die Lichtintensität der Lichtverteilungen, die von unterschiedlichen Projektionsvorrichtungen (4a, 4b, 4c, 4d) abgestrahlt wird, gleich ist.

9. Kraftfahrzeuglichtsystem (2) nach einem der vorhergehenden Ansprüche, wobei drei oder mehr Fahrwerk-Höhenstufen (S0, S1) vorgesehen sind.

10. Kraftfahrzeuglichtsystem (2) nach einem der vorhergehenden Ansprüche, wobei die Differenz der Höhe der Nullstufe (S0) und der Höhe der höchsten Fahrwerk-Höhenstufe (S1) zwischen 1cm und 20cm beträgt und die Fahrwerk-Höhenstufen (S0, S1) vorzugsweise gleichmäßig voneinander beabstandet sind.

11. Kraftfahrzeuglichtsystem (2) nach einem der vorhergehenden Ansprüche, wobei die Reichweitengrenze (D_max) der Bodenprojektion im montierten Zustand des Kraftfahrzeuglichtsystem (2) zwischen 0,5m und 3m, insbesondere zwischen 1m und 2m beträgt, wobei die Reichweitengrenze (D_max) entlang eines ebenen Bodens (B) in Normalabstand zur Längsachse (x) des Fahrzeugs (1) ausgehend von einer Normalprojektion des Schwellers (6) des Kraftfahrzeugs bis zum Ende der Bodenprojektion (B4a, B4c) gemessen wird.

12. Kraftfahrzeuglichtsystem (2) nach einem der vorhergehenden Ansprüche, wobei die Projektionsvorrichtungen (4a, 4b, 4c, 4d) matrixartig auf dem gemeinsamen Träger (4') angeordnet sind und zwischen benachbarten Projektionsvorrichtungen (4a, 4b, 4c, 4d) eine lichtundurchlässige Isolierung (4") angeordnet ist.

13. Kraftfahrzeug (1), umfassend zumindest zwei Kraftfahrzeuglichtsysteme (2) nach einem der vorhergehenden Ansprüche, wobei das Kraftfahrzeug (1) eine linke und eine rechte Fahrzeugseite aufweist, und jede Fahrzeugseite zumindest eine Tür (7) mit einer der Tür (7) zugeordneten Schwelle (6) aufweist, wobei in den Schwellen jeweils die Projektionsvorrichtungen (4a, 4b, 4c, 4d) angeordnet sind.

## Claims

1. Motor vehicle lighting system (2) for emitting position-limited ground projections (B4a, B4c) for a motor vehicle (1) having a chassis (3) which can be adjusted in height in steps, at least two predefined chassis height stages (S0, S1) being provided, namely a zero stage (S0) and at least one higher operating stage (S1), the motor vehicle lighting system (2) comprising
- at least two projection devices (4a, 4b, 4c, 4d),
- a control unit (5) connected to each projection device (4a, 4b, 4c, 4d) for individually controlling each projection device (4a, 4b, 4c, 4d),
wherein each projection device (4a, 4b, 4c, 4d) is set up for mounting in or on a motor vehicle, in particular in or on a door sill (6) of the motor vehicle (1), wherein each projection device (4a, 4b, 4c, 4d) is furthermore set up for this purpose, in a state mounted on the motor vehicle (1) and activated, to precisely project a ground projection (B4a, B4c) starting from an immediate close-up region (αₘᵢₙ) of the motor vehicle (1) onto a laterally surrounding ground (B) up to a maximum flat critical angle (α_{max_a}, α_{maxc}), wherein all projection devices (4a, 4b, 4c, 4d) are mounted on a common carrier (4') and arranged within a common plane (E) and each have an optical axis, wherein the optical axes of the projection devices are oriented parallel to one another, wherein the beam angle of each projection device (4a, 4b, 4c, 4d) in the mounted state is limited towards a horizontal plane (H) such that the radiation is inclined downwards with respect to the horizontal plane (H),
**characterized in that**
each projection device (4a, 4b, 4c, 4d) is a microlens projection module (4), each microlens projection module (4) comprising
*a light source (41),
*an entrance optic (42) having a total number of micro-entry optics (421) arranged in an array, the entrance optic (42) being adapted to receive light emitted from the light source (41),
*and an exit optic (43) comprising a total number of micro-exit optics (431) arranged in an array,
wherein each micro-entry optic (421) is assigned precisely one micro-exit optic (431), wherein the micro-entry optics (421) are designed and/or the micro-entry optics (421) and the micro-exit optics (431) are arranged relative to one another in such a way that substantially all of the light emerging from a micro-entry optic (421) enters only the assigned micro-exit optic (431), and wherein the light preformed by the micro-entry optics (421) can be imaged by the micro-exit optics (431) in the mounted state of the motor vehicle lighting system (2) into an area next to the motor vehicle (1) as said ground projection (B4a, B4c), at least one diaphragm device (44) being arranged between the micro-entry optics (421) and the micro-exit optics (431), the control unit (5) having a communication interface (5a) for receiving and evaluating a running gear signal (S), the running gear signal (S) containing information on the actual state of the running chassis height stage (S0, S1),
wherein the operation of at least one projection device (4a, 4b, 4c, 4d) optimized for this purpose is provided for each chassis height stage (S0, S1), wherein for each projection device (4a, 4b, 4c, 4d) optimized for a chassis height stage (S0, S1), at least one projection device (4a, 4b, 4c, 4d) optimized for a chassis height stage (S0, S1) is provided for each chassis height stage (S0, S1), a range limit (D_max) of the ground projection (B4a, B4c) is obtained on the basis of the height (h4c0, h4a0, h4c1, h4a1) present in the respective chassis height stage (S0, S1) and the flat limiting angle (α_{max_a}, α_{maxc}) assigned to the respective projection device (4a, 4b, 4c, 4d),
wherein the optimization of the projection devices (4a, 4b, 4c, 4d) is implemented in such a way that the projection devices (4a, 4b, 4c, 4d) optimized for the respective chassis height stages (S0, S1) have different flat critical angles (α_{max_a}, α_{maxc}), and in such a way that the flat critical angles (α_{max_a}, α_{maxc}) of the projection devices (4a, 4b, 4c, 4d), starting from that projection device (4a) which is optimized for the zero stage (S0), increases with increasing height of the chassis height stages (S0, S1) assigned to the projection devices (4a, 4b, 4c, 4d) in accordance with the height difference (Δh) to the zero stage (S0), so that for each chassis height stage (S0, S1) at least one projection device (4a, 4b, 4c, 4d) is provided, the range limit (D0, D1) of which in operation of the chassis height stage (S0, S1), for which the respective projection device (4a, 4b, 4c, 4d) is optimized, corresponds to the range limit (D_max) of the projection device (4a, 4b, 4c, 4d) for the zero stage (S0), wherein the entrance optics (42) and the exit optics (43) of all projection devices (4a, 4b, 4c, 4d) are designed in the same way, wherein the projection devices (4a, 4b, 4c, 4d) optimized for the respective chassis height stages (S0, S1) differ from one another in the design of the aperture devices (44), wherein the projection devices (4a, 4b, 4c, 4d), which are optimized for different chassis height stages (S0, S1), differ from one another by the configuration of apertures (441'), specifically in such a way that the size of the respective aperture (441') decreases with optimization for increasing height of the chassis height stage (S0, S1).

2. Motor vehicle lighting system (2) according to claim 1, wherein the control of the projection devices (4a, 4b, 4c, 4d) by the control unit (5) is designed in such a way that the operation of those projection devices (4a, 4b, 4c, 4d) is deactivated which are optimized for a lower chassis height stage (S0, S1) than the present chassis height stage (S0, S1) determined on the basis of the chassis signal (S).

3. Motor vehicle lighting system (2) according to claim 2, wherein the control of the projection devices (4a, 4b, 4c, 4d) by the control unit (5) is designed in such a way that those projection devices (4a, 4b, 4c, 4d) which are optimized for operation with a higher chassis height stage (S1) than the established present chassis height stage (S0) can still be activated.

4. Motor vehicle lighting system (2) according to claim 3, wherein the control of the projection devices (4a, 4b, 4c, 4d) by the control unit (5) is designed in such a way that an animation is projected by a time sequence of the activation of projection devices (4a, 4b, 4c, 4d), wherein the temporal sequence of activation also comprises those projection devices (4a, 4b, 4c, 4d) which are optimized for operation with a higher chassis height stage (S1) than the established present chassis height stage (S0).

5. Motor vehicle lighting system (2) according to claim 2, wherein the control of the projection devices (4a, 4b, 4c, 4d) by the control unit (5) is carried out in such a way that the operation of all projection devices (4a, 4b, 4c, 4d) which are not optimized for the established present chassis height stage (S0, S1) is deactivated.

6. Motor vehicle lighting system (2) according to one of the preceding claims, wherein the projection devices (4a, 4b, 4c, 4d), which are optimized for different chassis height stage (S0, S1), differ by the intended spatial positioning on the motor vehicle (1), in such a way that, with optimization for decreasing height of the chassis height stage (S0, S1), the height of the mounting position of the respective projection device (4a, 4b, 4c, 4d) increases.

7. Motor vehicle lighting system (2) according to one of the preceding claims, wherein the control unit (5) is set up to regulate the intensity of the radiation of at least those light sources (41) which are assigned to the projection devices (4c, 4d) with the exception of the projection device (4a, 4b) of the zero stage (50).

8. Motor vehicle lighting system (2) according to claim 7, wherein the nominal power of the light sources (41) of the corresponding projection devices (4a, 4b, 4c, 4d) is increased with decreasing size of the aperture (441'), so that the light intensity of the light distributions emitted by different projection devices (4a, 4b, 4c, 4d) is the same.

9. Motor vehicle lighting system (2) according to one of the preceding claims, wherein three or more chassis height stage (S0, S1) are provided.

10. Motor vehicle lighting system (2) according to one of the preceding claims, wherein the difference between the height of the zero stage (S0) and the height of the highest chassis height stage (S1) is between 1 cm and 20 cm and the chassis height stages (S0, S1) are preferably evenly spaced apart.

11. Motor vehicle lighting system (2) according to one of the preceding claims, wherein the range limit (D_max) of the ground projection in the mounted state of the motor vehicle lighting system (2) is between 0.5m and 3m, in particular between 1m and 2m, the range limit (D_max) being measured along a lateral ground (B) at a normal distance from the longitudinal axis (x) of the vehicle (1), starting from a normal projection of the sill (6) of the motor vehicle up to the end of the ground projection (B4a, B4c).

12. Motor vehicle lighting system (2) according to one of the preceding claims, wherein the projection devices (4a, 4b, 4c, 4d) are arranged in a matrix-like manner on the common carrier (4') and a light-impermeable insulation (4") is arranged between adjacent projection devices (4a, 4b, 4c, 4d).

13. Motor vehicle (1), comprising at least two motor vehicle lighting systems (2) according to one of the preceding claims, wherein the motor vehicle (1) has a left and a right vehicle side, and each vehicle side has at least one door (7) with a threshold (6) associated with the door (7), wherein the projection devices (4a, 4b, 4c, 4d) are arranged in the thresholds in each case.

## Revendications

1. Système d'éclairage pour véhicule automobile (2) destiné à émettre des projections au sol à position limitée (B4a, B4c) pour un véhicule automobile (1) ayant un châssis (3) à hauteur réglable par paliers, dans lequel au moins deux niveaux de hauteur de châssis prédéfinis (S0, S1) sont prévus, à savoir un niveau zéro (S0) et au moins un niveau de hauteur de châssis (S1), le système d'éclairage pour véhicule automobile (2) comprenant :
- au moins deux dispositifs de projection (4a, 4b, 4c, 4d),
- une unité de commande (5) reliée à chaque dispositif de projection (4a, 4b, 4c, 4d) pour la commande individuelle de chaque dispositif de projection (4a, 4b, 4c, 4d),
chaque dispositif de projection (4a, 4b, 4c, 4d) étant conçu pour être monté dans ou sur un véhicule automobile, en particulier dans ou sur un seuil de porte (6) du véhicule automobile (1), chaque dispositif de projection (4a, 4b, 4c, 4d) étant en outre conçu pour, dans un état monté et activé sur le véhicule automobile (1), à réaliser exactement une projection au sol (B4a, B4c) en partant d'une zone proche immédiate (αₘᵢₙ) du véhicule automobile (1) sur un sol (B) qui l'entoure latéralement jusqu'à un angle limite plat maximal (α_{max_a}, α_{maxc}), tous les dispositifs de projection (4a, 4b, 4c, 4d) étant fixés sur un support commun (4') et disposés dans un plan commun (E) et présentant chacun un axe optique, les axes optiques des dispositifs de projection étant orientés parallèlement les uns aux autres, l'angle de rayonnement de chaque dispositif de projection (4a, 4b, 4c, 4d) étant limité, à l'état monté, vers un plan horizontal (H), et ce de telle sorte que le rayonnement soit incliné vers le bas par rapport au plan horizontal (H),
**caractérisé en ce que**
chaque dispositif de projection (4a, 4b, 4c, 4d) étant un module de projection à microlentille (4), chaque module de projection à microlentille (4) étant
*une source de lumière (41),
*une optique d'entrée (42) comprenant un nombre total de micro-optiques d'entrée (421) disposées en un réseau, l'optique d'entrée (42) étant adaptée pour recevoir la lumière émise par la source de lumière (41),
*ainsi qu'une optique de sortie (43) comprenant un nombre total de micro-optiques de sortie (431) disposées en un réseau,
dans lequel à chaque micro-optique d'entrée (421) est associée exactement une micro-optique de sortie (431), les micro-optiques d'entrée (421) étant réalisées de telle sorte et/ou les micro-optiques d'entrée (421) et les micro-optiques de sortie (431) étant disposées les unes par rapport aux autres de telle sorte que sensiblement toute la lumière sortant d'une micro-optique d'entrée (421) ne pénètre que dans la micro-optique de sortie (431) associée, et la lumière préformée par les micro-optiques d'entrée (421) pouvant être reproduite par les micro-optiques de sortie (431) à l'état monté du système d'éclairage de véhicule (2) dans une zone à côté du véhicule (1) sous forme de ladite projection au sol (B4a, B4c), au moins un dispositif de diaphragme (44) étant disposé entre la micro-optique d'entrée (421) et la micro-optique de sortie (431), l'unité de commande (5) présentant une interface de communication (5a) pour la réception et l'évaluation d'un signal de châssis (S), le signal de châssis (S) contenant des informations sur l'état réel de l'étage de hauteur de châssis (S0, S1),
dans lequel, pour chaque niveau de hauteur de châssis (S0, S1), il est prévu le fonctionnement d'au moins un dispositif de projection (4a, 4b, 4c, 4d) optimisé à cet effet, dans lequel, pour chaque dispositif de projection (4a, 4b, 4c, 4d) qui est optimisé pour un niveau de hauteur de châssis (S0, S1), sur la base de la hauteur (h4c0, h4a0, h4c1, h4a1) présente dans le niveau de hauteur de châssis (S0, S1) respectif ainsi que de l'angle limite plat (α_{max,a}, α_{maxc}) associé au dispositif de projection (4a, 4b, 4c, 4d) respectif, on obtient une limite de portée (D_max) de la projection au sol (B4a, B4c),
dans lequel l'optimisation des dispositifs de projection (4a, 4b, 4c, 4d) est mise en oeuvre de telle sorte que les dispositifs de projection (4a, 4b, 4c, 4d) optimisés pour les niveaux de hauteur de châssis (S0, S1) respectifs présentent des angles limites plats (α_{max_a}, α_{maxc}) différents, et ce de telle sorte que les angles limites plats (α_{max_a}, α_{maxc}) des dispositifs de projection (4a, 4b, 4c, 4d) soient plus grands que les angles limites plats (α_{max_a}, α_{maxc}) des dispositifs de projection (4a, 4b, 4c, 4d), 4c, 4d), en partant du dispositif de projection (4a) qui est optimisée pour le niveau zéro (S0), augmentent avec une hauteur croissante des niveaux de hauteur de châssis (S0, S1) associés aux dispositifs de projection (4a, 4b, 4c, 4d) en fonction de la différence de hauteur (Δh) par rapport au niveau zéro (S0), de sorte que pour chaque niveau de hauteur de châssis (S0, S1), au moins un dispositif de projection (4a, 4b, 4c, 4d), dont la limite de portée (D0, D1) en fonctionnement du niveau de hauteur du châssis (S0, S1), pour lequel le dispositif de projection respectif (4a, 4b, 4c, 4d) est optimisé, coïncide avec la limite de portée (D_max) du dispositif de projection (4a, 4b, 4c, 4d) pour le niveau zéro (S0), les optiques d'entrée (42) et les optiques de sortie (43) de tous les dispositifs de projection (4a, 4b, 4c, 4d) étant conçues de la même manière, les dispositifs de projection (4a, 4b, 4c, 4d) optimisés pour les niveaux de hauteur de châssis (S0, S1) respectifs se différenciant les uns des autres par la conception des dispositifs de diaphragme (44), les dispositifs de projection (4a, 4b, 4c, 4d) optimisés pour différents niveaux de hauteur de châssis (S0, S1) se distinguant les uns des autres par la configuration des ouvertures de diaphragme (441'), et ce de telle sorte qu'avec l'optimisation pour une hauteur croissante des niveaux de hauteur de châssis (S0, S1), la taille de l'ouverture de diaphragme respective (441') diminue.

2. Système d'éclairage pour véhicule automobile (2) selon la revendication 1, dans lequel la commande des dispositifs de projection (4a, 4b, 4c, 4d) par l'unité de commande (5) est conçue de telle sorte que le fonctionnement des dispositifs de projection (4a, 4b, 4c, 4d) qui sont optimisés pour un niveau de hauteur de châssis (S0, S1) plus bas que le niveau de hauteur de châssis (S0, S1) présent déterminé à l'aide du signal de châssis (S) est désactivé.

3. Système d'éclairage pour véhicule automobile (2) selon la revendication 2, dans lequel la commande des dispositifs de projection (4a, 4b, 4c, 4d) par l'unité de commande (5) est conçue de telle sorte que les dispositifs de projection (4a, 4b, 4c, 4d) qui sont optimisés pour un fonctionnement avec un niveau de hauteur de châssis (S1) plus élevé que le niveau zéro (S0) présent détecté, peuvent encore être activés.

4. Système d'éclairage pour véhicule automobile (2) selon la revendication 3, dans lequel la commande des dispositifs de projection (4a, 4b, 4c, 4d) par l'unité de commande (5) est conçue de telle sorte que, par une succession temporelle de l'activation des dispositifs de projection (4a, 4b, 4c, 4d), la séquence temporelle d'activation comprenant également les dispositifs de projection (4a, 4b, 4c, 4d) qui sont optimisés pour un fonctionnement avec un niveau de hauteur de châssis (S1) plus élevé que le niveau zéro (S0) présent constaté.

5. Système d'éclairage pour véhicule automobile (2) selon la revendication 2, dans lequel la commande des dispositifs de projection (4a, 4b, 4c, 4d) par l'unité de commande (5) est réalisée de manière à désactiver le fonctionnement de tous les dispositifs de projection (4a, 4b, 4c, 4d) qui ne sont pas optimisés pour le présent niveau de hauteur de châssis (S0, S1) détecté.

6. Système d'éclairage pour véhicule automobile (2) selon l'une des revendications précédentes, dans lequel les dispositifs de projection (4a, 4b, 4c, 4d), qui sont optimisés pour différents niveaux de hauteur de châssis (S0, S1), se distinguent par le positionnement spatial prévu sur le véhicule automobile (1), et ce de telle sorte que, avec l'optimisation pour une hauteur décroissante des niveaux de hauteur de châssis (S0, S1), la hauteur de la position de montage du dispositif de projection (4a, 4b, 4c, 4d) correspondant augmente.

7. Système d'éclairage pour véhicule automobile (2) selon l'une des revendications précédentes, dans lequel l'unité de commande (5) est agencée pour régler l'intensité du rayonnement d'au moins les sources lumineuses (41) qui sont associées aux dispositifs de projection (4c, 4d) à l'exception du dispositif de projection (4a, 4b) du niveau zéro (S0).

8. Système d'éclairage pour véhicule automobile (2) selon la revendication 7, dans lequel, lorsque la taille de l'ouverture du diaphragme (441') diminue, la puissance nominale des sources lumineuses (41) des dispositifs de projection correspondants (4a, 4b, 4c, 4d) est augmentée, de sorte que l'intensité lumineuse des répartitions lumineuses émises par différents dispositifs de projection (4a, 4b, 4c, 4d) est égale.

9. Système d'éclairage pour véhicule automobile (2) selon l'une quelconque des revendications précédentes, dans lequel trois niveaux de hauteur de châssis (S0, S1) ou plus sont prévus.

10. Système d'éclairage pour véhicule automobile (2) selon l'une des revendications précédentes, dans lequel la différence entre la hauteur du niveau zéro (S0) et la hauteur du niveau de hauteur de châssis (S1) est comprise entre 1 cm et 20 cm, et les étages de hauteur de châssis (S0, S1) sont de préférence régulièrement espacés les uns des autres.

11. Système d'éclairage pour véhicule automobile (2) selon l'une des revendications précédentes, dans lequel la limite de portée (D_max) de la projection au sol à l'état monté du système d'éclairage pour véhicule automobile (2) est comprise entre 0,5m et 3m, en particulier entre 1m et 2m, la limite de portée (D_max) étant mesurée le long d'un sol plan (B) à une distance normale de l'axe longitudinal (x) du véhicule (1) en partant d'une projection normale du seuil de porte (6) du véhicule automobile jusqu'à la fin de la projection au sol (B4a, B4c).

12. Système d'éclairage pour véhicule automobile (2) selon l'une des revendications précédentes, dans lequel les dispositifs de projection (4a, 4b, 4c, 4d) sont disposés de manière matricielle sur le support commun (4') et un isolant opaque (4") est disposé entre des dispositifs de projection voisins (4a, 4b, 4c, 4d).

13. Véhicule automobile (1) comprenant au moins deux systèmes d'éclairage de véhicule automobile (2) selon l'une des revendications précédentes, le véhicule automobile (1) présentant un côté gauche et un côté droit de véhicule, et chaque côté de véhicule présentant au moins une porte (7) avec un seuil (6) associé à la porte (7), les dispositifs de projection (4a, 4b, 4c, 4d) étant respectivement disposés dans les seuils.
